# EUROPEAN PATENT APPLICATION

(11) **EP 3 018 549 A1**
(43) Date of publication of application: **11.05.2016**
(21) Application number: 14819610.8
(22) Date of filing: 17.04.2014
(51) Int. Cl.: G05D 1/08, A63H 27/133, A63H 30/04

(54) **CONTROL METHOD AND DEVICE FOR MOTION MODE OF REMOTE CONTROL MODEL, AND REMOTE CONTROL MODEL**

(30) Priority: 04.07.2013 CN 201310279385
(71) Applicant: Shanghai Nine Eagels Electronic Technology Co., Ltd., Shanghai 201801 (CN)
(72) Inventor: HUANG, Cheng, Shanghai 201801 (CN); ZHAN, Chaolin, Shanghai 201801 (CN)
(74) Representative: Petraz, Gilberto Luigi
(86) International application number: PCT/CN2014/075614
(87) International publication number: WO 2015/000324

(57) **Abstract**

A control method and a control device for a motion model of a remote control model, and the remote control model are disclosed, wherein the method comprises: under the condition that a control mode in multiple preconfigured control mode is triggered, calling an instruction set corresponding to the triggered control model according to a corresponding relationship between preset control model modes and instruction sets, wherein each instruction set is used for controlling the remote control model to move under the condition of meeting the requirements of the corresponding control mode; and the motion of the remote control model is controlled according to instructions called in the called instruction set. According to the present invention, the remote control model can be automatically controlled under the condition that the specific control model mode is triggered by configuring multiple control modes and corresponding instruction sets, so that the problem of damage or loss of the model caused by improper operations of the user is avoided, the difficulty in remote control of the model is effectively reduced, and the user experience is improved.

## Description

### TECHNICAL FIELD

The present invention relates to the field of remote control models, in particular to a control method and a control device for a motion mode of a remote control model, and the remote control model.

### BACKGROUND ART

Remote control models (including aircraft models, car models and ship models) are being loved by more and more users at present, however, there has a certain difficulty in terms of remote control of the remote control models, and if the user has no enough experience to control the model to move in accordance with a reasonable manner, it will likely lead to damage of the models.

For example, three links having relatively great difficulties main remain in the control over the remotely controlled aircraft models:
(1) take-off: during take-off of the model, owing to the absence of height, enough velocity and stable posture of the model, it must be required that an operator can make a correct judgment and a timely manipulation if the model is to be taken off normally, and furthermore, there has been a higher requirement on the control precision since it will lead to damage of the model in case of a tiny error;
(2) course reversal: the model is always far away from the ground while flying in the air, not only can the model not reverse the course successfully, but it will also fly farther and farther and finally fail to be found out if the operator cannot master the flight course accurately, see the posture of the model clearly and control the rudder amount well, and it will easily lead to loss and crash of the model in case of meeting severe environments, such as strong wind.
(3) Landing: because the flight height of the model is lower and lower during landing, it is required for the operator to correct in time according to the velocity, the height as well as wind speed and direction, or else it will likely lead that the model crashes to obstacles, flies out of a site or collides with the ground roughly.

As to other types of remote control models, such as car models or ship models, the similar problem that the operation difficulty is relatively high is present as well.

It can thus be seen from the description aforesaid that there has relatively high difficulty in terms of the control over the model, and the model will be likely damaged in case of improper operation, so that not only is the user experience influenced, but also the cost of the user will be increased.

An effective solution has not been proposed yet at present for the problems that the model is greatly difficult to be controlled remotely and easily damaged in related technologies.

### SUMMARY OF THE INVENTION

The present invention proposes a control method and a control device for a motion mode of a remote control model, and the remote control model regarding the problems that the model is greatly difficult to be controlled remotely and easily damaged in related technologies, so that the remote control model can automatically call and finish some instructions according to the demands of the user to avoid massive operations of the user and prevent the problem of damage or loss of the model caused by improper operations of the user.

The technical solution of the present invention is emboded by the follow technical solution:
according to one aspect of the present invention, a control method for the motion mode of the remote control model is proposed.

The method comprises: under the condition that a control mode in multiple preconfigured control modes is triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and the motion of the remote control model is controlled according to instructions in the called instruction set.

Wherein, the multiple control modes include a mode requiring the remote control model to finish specific actions, and in addition, the instruction set corresponding to said mode comprises instructions required for controlling the remote control model to finish the specific actions.

Optionally, the specific actions aforesaid include at least one of the followings: take-off, course reversal, circling, landing and prompt drop.

Moreover, in case that the specific action is course reversal, the motion of the remote control model is controlled according to the instructions in the called instruction set, namely comprising: acquiring azimuth angle information of remote control equipment of the remote control model and azimuth angle information of the remote control model, and selecting instructions from the instruction set according to the acquired azimuth angle information and executing the instructions to control the remote control model to reverse the course.

In addition, the motion of the remote control model is controlled according to the instructions in the called instruction set, namely comprising: acquiring current motion parameter information of the remote control model, and selecting the instructions from the instruction set according to the current motion parameter information of the remote control model and executing the instructions.

In addition, multiple control modes include a mode requiring the remote control model to be at a preset motion posture, and furthermore, the instruction set corresponding to said mode comprises instructions required for controlling the remote control model to be kept under the preset motion posture.

Furthermore, the motion of the remote control model is controlled according to the instructions in the called instruction set, namely comprising: acquiring current motion parameter information of the remote control model, and executing a remote control instruction from remote control equipment of the remote control model on the premise of selecting the instructions from the instruction set according to the current motion parameter information of the remote control model and executing the instructions to control the remote control model to be at a preset motion posture.

According to another aspect of the present invention, a control device for a motion mode of the remote control model is proposed.

The device comprises: a calling model for, under the condition that a control mode in multiple preconfigured control modes is triggered, calling a instruction set corresponding to the triggered control mode according to a corresponding relationship between preset control modes and instruction sets, wherein each instruction set is used for controlling the remote control model to move under the condition of meeting the requirements of the corresponding control mode; and a control model for controlling the motion of the remote control model according to instructions in the called instruction set.

Wherein, the multiple control modes include a mode requiring the remote control model to finish specific actions, and in addition, the instruction set corresponding to said mode comprises instructions required for controlling the remote control model to finish the specific actions.

Optionally, the specific actions aforesaid include at least one of the followings: take-off, course reversal, circling, landing and prompt drop.

Moreover, the control module is used for acquiring current motion parameter information of the remote control model, and selecting instructions from the instruction set according to the current motion parameter information of the remote control model and executing the instructions.

In addition, multiple control modes include a mode requiring the remote control model to be at a preset motion posture, and furthermore, the instruction set corresponding to said mode comprises instructions required for controlling the remote control model to be kept under the preset motion posture.

Furthermore, the control module is used for acquiring current motion parameter information of the remote control model, and executing a remote control instruction from remote control equipment of the remote control model on the premise of selecting the instructions from the instruction set according to the current motion parameter information of the remote control model and executing the instructions to control the remote control model to be at a preset motion posture.

According to another aspect of the present invention, a remote control model is proposed.

The remote control model comprises: a sensor for acquiring motion parameter information of the remote control model; a calling model for, under the condition that a control mode in multiple preconfigured control modes is triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and a control module for controlling the motion of the remote control model according to instructions in the called instruction set and the motion parameter information of the remote control model acquired by the sensor.

Wherein, the motion parameter information aforesaid comprises at least one of the followings: azimuth angle information, height information, acceleration information and angular velocity information.

According to the present invention, the remote control model can be automatically controlled under the condition that the specific control mode is triggered by setting multiple control modes and the corresponding instruction sets, so that the problem of damage or loss of the model caused by improper operations of the user is prevented, the difficulty in remote control of the model is effectively reduced, and the user experience is improved.

### BRIEF DESCRIPTION OF THE DRAWINGS

Accompanying drawings that need to be used in description of the embodiments will be briefly introduced below in order to illustrate the embodiments of the present invention and the technical solution of the existing technology clearly, and it is apparent for those common skilled in the art that the accompany drawings described as below are just some embodiments of the present invention and other accompany drawings can be acquired on the basis of those accompany drawings on the premise of not paying creative work.
FIG. 1 is a flow diagram of a control method for a motion mode of a remote control model according to the embodiment of the present invention;
FIG. 2 is a block diagram of a control device for the motion mode of the remote control model according to the embodiment of the present invention;
FIG. 3 is a functional block diagram of a remote control instruction receiving system in the traditional aircraft model; and
FIG. 4 is a functional block diagram of a remote control instruction receiving system in an aircraft model according to the embodiment of the present invention.

### DETAILED DESCRIPTIONS OF THE PREFERRED EMBODIMENTS

The technical solution in the embodiments of the present invention will be described clearly and completely below in conjunction with the attached drawings in the embodiments of the present invention. Obviously, the described embodiments are just a part of embodiments of the present invention, rather than all of the embodiments. On the basis of the embodiments in the present invention, all the other embodiments, made by common technical skilled in the art, fall into the protection scope of the present invention.

According to the embodiment of the present invention, a control method for a motion mode of a remote control model is proposed.

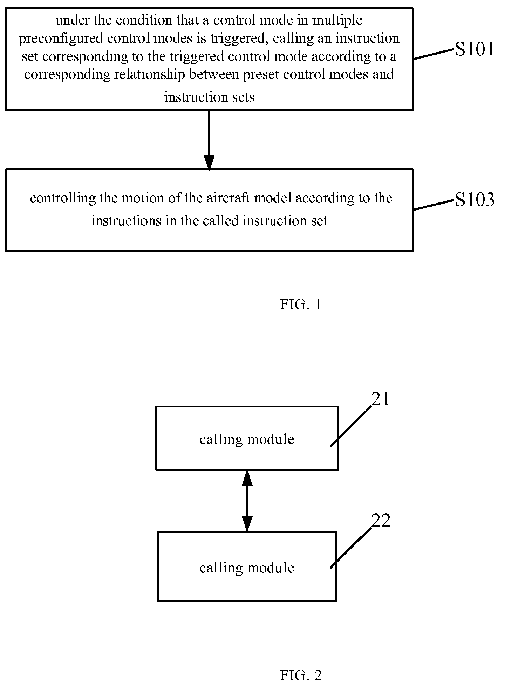

As shown in FIG. 1, the control method for the motion mode of the remote control model according to the embodiment of the present invention comprises:
S101, under the condition that (certain or multiple) control mode(s) in multiple preconfigured control modes is (are) triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and
S103, controlling the motion of the remote control model according to instructions in the called instruction set;

Wherein, the multiple control modes include a mode requiring the remote control model to finish specific actions, and in addition, the instruction set corresponding to said mode comprises instructions required for controlling the remote control model to finish the specific actions.

In addition, the specific actions needing to be finished comprise at least one of the followings: take-off, course reversal, circling, landing and prompt drop (fast landing).

Current motion parameter information of the remote control model is acquired when the motion of the remote control model is controlled according to instructions in the called instruction set, and instructions are selected from the instruction set according to the current motion parameter information of the remote control model and then executed.

Wherein, optionally, motion parameter information of the remote control model may comprise at least one of the followings: azimuth angle information, height information, acceleration information and angular velocity information.

So, the actual motion state of the model can be mastered at any time after the motion parameter information of the remote control model is mastered, and therefore various actions can be finished on the premise of ensuring the safety of the remote control model.

For example, as for an aircraft model, a control mode corresponding to take-off can be directly triggered while the aircraft model is taken off, and therefore, the aircraft model can automatically execute take-off related instructions, and a steady posture of the aircraft model can be kept in a take-off process.

In addition, azimuth angle information of the remote control equipment of the remote control model and azimuth angle information of the remote control model can be acquired (for example, acquired via sensors mounted on the remote control equipment and the remote control model) under the condition that the user indicates that the specific action needing to be finished is course reversal, and instructions are selected from the instruction set according to the acquired azimuth angle information and then executed to control the remote control model to reverse the course. Moreover, GPS equipment may be also mounted on the remote control model and the remote control equipment, and therefore automatic course reversal can be realized when the user requires the model to reverse the course, and a steady state of the model can be kept as well in a course reversal process.

Actually, both corresponding control modes and corresponding instruction sets may be set for many actions so as to avoid the difficulty caused by those actions to the user operating the remote control model, and the user can select to trigger these modes at any time, such that the remote control model automatically finishes these actions, or the user may finish these actions manually rather than selecting to trigger these control modes.

In the specific embodiments, for example, as for the aircraft model, the multiple control modes can comprise requiring the aircraft model to be at a preset flight control mode (in correspondence to different posture requirements, when the description is made hereinafter in conjunction with the aircraft model, such mode for controlling the aircraft model to be at a preset posture is referred as a first flight control state, namely a flight control device provides a "posture correcting" instruction which makes the remote control model recover to a straight flight state from an emergency state, a second flight control state, namely the flight control device provides a "stability increasing" instruction which offsets various disturbances and increase the stability of the model, and a third flight control state, namely the flight control device is powered off and the model flies completely according to remote control instructions), and furthermore, an instruction set corresponding to said mode comprises instructions required for controlling the aircraft to be kept at a preset motion posture. The current motion parameter information of the aircraft model can be acquired when the motion of the aircraft model is controlled according to the instructions in the called instruction set, and the remote control instructions from the remote control equipment of the aircraft model are executed on the premise that the instructions are selected from the instruction set according to the current motion parameter information of the aircraft model and then executed to control the aircraft model to be at a preset motion posture.

For example, said preset motion postures may comprise a steady posture, at this moment, once the corresponding control mode is triggered, the aircraft model not only can move according to extra instructions of the user, but also can ensure that all motions are performed on the premise of keeping the steady posture.

According to the embodiment of the present invention, a control device for the motion mode of the remote control model is also proposed.

As shown in FIG. 2, the control device for the motion mode of the remote control model according to the embodiment of the present invention comprises:
a calling module 21 for, under the condition that (certain or multiple) control mode(s) in multiple preconfigured control mode is (are) triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and
a control module 22 for controlling the motion of the remote control model according to the instructions in the called instruction set.

Wherein, multiple control modes comprise a mode of requiring the remote control model to finish the specific actions, and in addition, an instruction set corresponding to said mode comprises instructions required for controlling the remote control model to finish the specific actions. Optionally, the specific actions comprise at least one of the followings: take-off, course reversal, circling, landing, prompt drop (fast landing). In addition, the control module 22 can be used for acquiring current motion parameter information of the remote control model, and selecting instructions from the instruction set according to the current motion parameter information of the remote control model and then executing the instructions.

Moreover, multiple control modes comprise a mode requiring the remote control model to be at a preset motion posture, and in addition, an instruction set corresponding to said mode comprises instructions required for controlling the remote control model to be kept at a preset motion posture. At this moment, the control module 22 is used for acquiring the current motion parameter information of the remote control model, and executing a remote control instruction from remote control equipment of the remote control model on the premise that the instructions are selected from the instruction set according to the current motion parameter information of the remote control model and then executed to control the remote control model to be at a preset motion posture.

According to the embodiment of the present invention, a remote control model is also proposed. The remote control model may comprise:
a sensor for acquiring the motion parameter information of the remote control model;
a calling module for, under the condition that a control mode in multiple preconfigured control modes is triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and
a control module for controlling the motion of the remote control model according to the instructions in the called instruction set and the motion parameter information of the remote control model acquired by the sensor.

The solutions abovementioned according to the embodiment of the present invention may be applied to various models, such as aircraft models, car models and ship models. For example, the technical solution of the present invention may be applied to an exerciser, and is hereinafter described mainly in combination with the exerciser.

By means of the technical solution of the present invention, the exerciser is capable of realizing automatic take-off, automatic course reversal, automatic landing and other actions to avoid aircraft damage caused by aircraft take-off and landing (actually, corresponding instruction sets and control modes can be set for various actions, so that the aircraft model can finish these actions automatically without manual operations by a user), and manipulation skills can be exercised in the air directly. An aircraft can rapidly return to a position above an operator by self by means of an automatic course reversal function once flying away in a flight process, so that the operator can continue to manipulate and exercise. In a landing stage, the aircraft is allowed to steadily land along a safe gliding route. If a flight site is too small to glide and land, a vertical landing method can be adopted to realize fast landing.

When the exerciser of the present invention is controlled, a user does not need to specially ask for a coach to carry out guidance aside and can finish manipulation independently by himself, so that the flight efficiency is remarkably improved, the flight chance is increased, the exercising progress is accelerated and the flight confidence is enhanced.

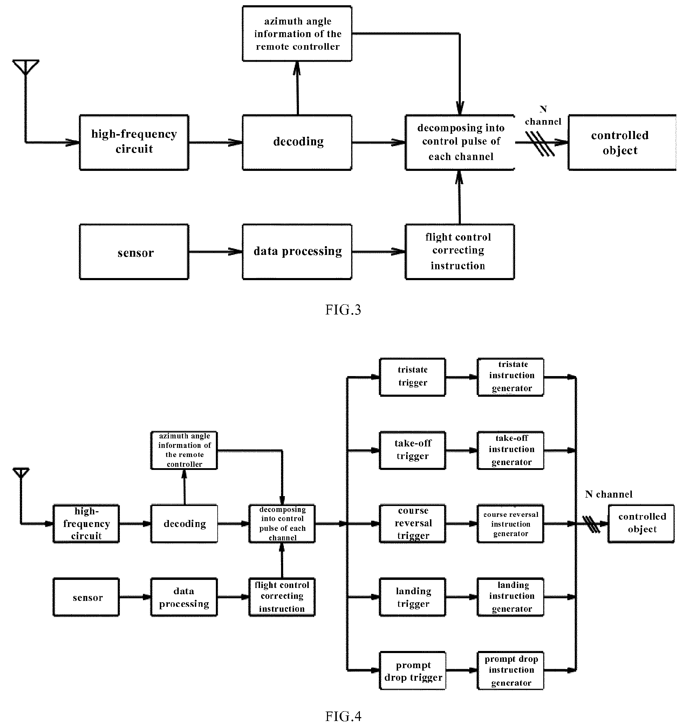

FIG. 3 is the functional block diagram of the remote control instruction receiving system in the traditional aircraft model.

As shown in FIG. 3, a traditional aircraft model comprises: a high-frequency circuit portion for receiving a signal; a decoding function for decoding a remote control signal and decomposing the decoded remote control signal to obtain control pulse of each channel and can combine azimuth angle information of the remote controller when the control pulses are obtained; a sensor for acquiring motion parameter information of the aircraft model; a data processing portion for processing the motion parameter information; a flight control instruction can be corrected according to the processed information, and the correction result will influence the control pulses actually obtained; and finally, a controlled object can be controlled through the control pulses.

That is to say, as for a traditional instruction receiving system, except for manipulation information generated by a remote controller manipulation handle and the like, received information also comprises azimuth angle information of a longitudinal axis of a remote controller. Various executing elements are controlled through control pulses, obtained after data processing, of various channels.

FIG. 4 is the functional block diagram of the remote control instruction receiving system in the aircraft model according to the embodiment of the present invention. As shown in FIG. 4, the functional composition prior to obtaining control pulses of various channels by decomposition in a receiving system according to one embodiment of the present invention is similar to the functions as shown in FIG. 3, and the difference lies in that the control pulses will trigger a part of or all of multiple triggers after the control pulses are obtained, and as shown in FIG. 4, a tristate instruction generator will generate a control instruction under the condition that a tristate trigger is triggered, thus controlling the aircraft model to be at a corresponding flight control state; a take-off instruction generator will generate a take-off instruction under a condition that a take-off trigger is triggered; a flight reversal instruction generator will generate a flight reversal instruction under the condition that a course reversal trigger is triggered; a landing instruction generator will generate a landing instruction under the condition that a landing trigger is triggered; a prompt drop instruction generator will generate a prompt drop instruction under a condition that a prompt drop trigger is triggered; and all the generated instructions will control a controlled object (each element on the aircraft model).

Therefore, in the embodiment as shown in FIG. 4, received manipulation information comprises several special control commands, namely tristate control, take-off, course reversal, landing and prompt drop (such several special control instructions correspond to said control modes). The five special control commands are used to trigger corresponding five flight state triggers, and then five instruction generators (in which instruction sets are stored) are used to generate corresponding flight control commands respectively to execute control masks for the five flight states.

These control modes will be described in detail as below.

### (I) Tristate Control

The tristate trigger for carrying out tristate control and the instruction generator can select three flight control working states after an aircraft sensor detects a flight posture of the model. The three working states will be described as follows:
a first flight control working state is as follows: information of the sensor is processed, and then a manipulation instruction received by a receiver is subjected to comprehensive processing. Under a general manipulation circumstance, the stability of the model can be increased by means of the information of the sensor, and once other manipulation handles, except a throttle manipulation handle are completely centered (as a trigger condition of the flight control working state), the flight posture of the model is corrected via the information of the sensor, and then the model enters a straight flying state. That is to say, under such flight control working state, no matter which flight posture that the model remains at that moment and regardless of tilt or dive, even upside down flight with a belly upwards, the model can automatically correct the flight posture and return to fly straightly. Therefore, such flight control working state can be called as a "posture correcting" state. Such state is especially suitable for newbies to adopt for beginning to exercise flight. In case that an emergency situation appears, the model automatically returns to a normal flight posture at once as long as both hands of the manipulator release, so as to avoid a crash accident.

A second flight control working state is as follows: information of the sensor is processed, and then a manipulation instruction received by the receiver is subjected to comprehensive processing. Under a general manipulation circumstance, the stability of the model can be increased by means of the information of the sensor, and the model cannot get more and more tilting to even enter a dangerous state. The change of the flight posture owing to external disturbances can be avoided. However, the model just can rest on the current flight posture under such flight control working state rather than being corrected. Therefore, such flight control working state may be called as "a stability increasing state". Flight under such state is conductive to the operator to master various skills of various flights, and under this state, although the stability of the model is improved to facilitate to exercise flight, the operator needs to finish some controls by himself rather than completely depending on a flight control system to ensure the flight safety.

A third flight control working state is as follows: the information of the sensor is free of any further processing, and manipulation information received by the receiver is not interfered, that is to say, the model flies according to the manipulation of the operator, and the flight control system does not "help" the operator to exercise flight. This is prepared for veterans. In such circumstances, the manipulation level of the operator can be sufficiently exerted to do various thrilling and exciting acrobatic maneuvers and enjoy the flight fun. Such flight control working state may be called as a "closing state".

### (II) Take-off

So-called take-off task is arranged in such a manner: a take-off trigger is triggered in need of according with several conditions after receiving a take-off command, and then a take-off instruction generator sends out a series of take-off manipulation instructions in sequence.

Conditions under which a take-off instruction is generated (conditions for triggering this take-off mode):
(1) a take-off command is received;
(2)a throttle remains for a certain time after receiving "completely opening"; and
(3)the model has an acceleration in a forwarding direction.

The take-off instruction (which may be an instruction corresponding to an instruction set for finishing a take-off action) at least comprises a part of or all of the following manipulation instructions:
centering a rudder surface after doing a transitory "pulling a rod of an elevator" action fast;
keeping a flat flight for a period of time;
pulling the rod to allow the model to climb fast, and keeping a climbing state to enable the model to raise to a safety height; and
ending a take-off stage, leveling off the elevator and enabling the model to enter a cruising state.

### (III) Course Reversal

A course reversal trigger is triggered after a receiver receives a course reversal command, and a course reversal instruction generator sends out a course reversal instruction: enabling the model to adjust a flight course immediately to make the flight course of the model point to a direction reverse to an azimuth angle of a remote controller, that is to say, enabling the model to fly towards the direction of the remote controller and fly closer to the position of the operator to achieve a purpose of automatic course reversal. Since remote control information includes azimuth angle information of the remote controller and information of an aircraft sensor, the flight course of the model can be corrected after both of which are combined, so that the model flies towards the remote controller to realize an automatic course reversal function. Moreover, after the information of the aircraft sensor and GPS information are combined, the flight course of the model can be corrected as well, so that the model flies towards the remote controller to realize an automatic course reversal function, and at this moment, GPS equipment needs to be mounted on the remote controller instead of a sensor.

### (IV) Circling

A circling trigger is triggered after the receiver receives a circling command is received, and a circling instruction generator sends out a circling instruction: enabling the model to do a circling flight immediately. The model can also automatically enter the circling flight after the course reversal process is ended.

### (V) Landing

A landing trigger is triggered after the receiver receives a landing command, and a landing instruction generator sends out a landing instruction: the model throttles back under a state of keeping steady flight and enters a gliding state, a fine tuning action of an elevator can be increased if necessary, the operator can adjust the fine tuning of the elevator according to the size of a gliding angle to make the model keep gliding at a proper angle, and the gliding angle can be further reduced prior to touching the ground to reduce the impact force while touching the ground.

### (VI) Prompt drop

A prompt drop trigger is triggered after the receiver receives a prompt drop command, and a prompt drop instruction generator sends out a prompt drop instruction: when a prompt drop mechanism actuates, the model enters a prompt drop state from a normal flight state, and steadily descends in a nearly vertical trajectory by means of the whole resistance.

FIG. 4 just shows a specific example, and actually, corresponding triggers and instruction generators can be configured for other flight control states and other actions except for actions such as take-off as well, and therefore, whether these actions are automatically finished by the aircraft model is judged according to the demands of the user.

From the above, by means of the technical solution abovementioned of the present invention, the aircraft model is capable of realizing automatic control under the condition that the specific control modes are triggered by configuring multiple control modes and the corresponding instruction sets, so that the problem of damage or loss of the model caused by improper operations of the user is avoided, the difficulty in remote control of the model is effectively reduced, and the user experience is improved.

The embodiments as stated above are just preferred embodiments of the present invention but do not limit the present invention. All amendments, equivalent substitutions, improvements and the like, without departing from the spirit and the principle of the present invention, should fall into the protection scope of the present invention.

## Claims

1. A method for controlling a motion mode of a remote control model, comprising:
under the condition that a control mode in multiple preconfigured control modes is triggered, calling a instruction set corresponding to the triggered control mode according to a corresponding relationship between preset control modes and instruction sets, wherein each instruction set is used for controlling the remote control model to move under the condition of meeting the requirements of the corresponding control mode; and
controlling the motion of the remote control model according to instructions in the called instruction set.

2. The control method according to Claim 1, wherein the multiple control modes include a mode requiring demanding the remote control model to finish specific actions, and in addition, the instruction set corresponding to said mode comprises instructions required for controlling the remote control model to finish the specific actions.

3. The control method according to Claim 2, wherein the specific actions include at least one of the followings: take-off, course reversal, circling, landing and prompt drop.

4. The control method according to Claim 3, wherein, in case that the specific action is course reversal, controlling the motion of the remote control model according to the instructions in the called instruction set, namely comprising:
acquiring azimuth angle information of remote control equipment of the remote control model and azimuth angle information of the remote control model, and selecting the instructions from the instruction set according to the acquired azimuth angle information and then executing the instructions to control the remote control model to reverse the course.

5. The control method according to any one of Claims 1 to 4, wherein the motion of the remote control model is controlled according to instructions in the called instruction set, namely comprising:
acquiring current motion parameter information of the remote control model, and selecting instructions from the instruction set according to the current motion parameter information of the remote control model and then executing the instructions.

6. The control method according to Claim 1, wherein the multiple control modes include a mode requiring the remote control model to be at a preset motion posture, and in addition, the instruction set corresponding to the mode comprises instructions required for controlling the remote control model to be kept at said preset motion posture.

7. The control method according to Claim 6, wherein the motion of the remote control model is controlled according to instructions in said called instruction set, namely comprising:
acquiring current motion parameter information of the remote control model, and executing a remote control instruction from remote control equipment of the remote control model on the premise of selecting the instructions from the instruction set according to the current motion parameter information of the remote control model and then executing the instructions to control the remote control model to be at said preset motion posture.

8. The control device for a motion mode of a remote control model, comprising:
a calling module for, under the condition that a control mode in multiple preconfigured control modes is triggered, calling an instruction set corresponding to the triggered control mode according to a corresponding relationship between preset control modes and instruction sets, wherein each instruction set is used for controlling the remote control model to move under the condition of meeting the requirements of the corresponding control mode; and
a control module for controlling the motion of the remote control model according to the instructions in the called instruction set.

9. The control device according to Claim 8, wherein the multiple control modes include a mode requiring the remote control model to finish specific actions, and in addition, the instruction set corresponding to said mode comprises instructions required for controlling the remote control model to finish the specific actions.

10. The control device according to Claim 9, wherein the specific actions include at least one of the followings: take-off, course reversal, circling, landing and prompt drop.

11. The control device according to any one of Claims 8 to 10, wherein the control module is used for acquiring current motion parameter information of the remote control model, and selecting instructions from the instruction set according to the current motion parameter information of the remote control model and then executing the instructions.

12. The control device according to Claim 8, wherein the multiple control modes include a mode requiring the remote control model to be at a preset motion posture, and in addition, the instruction set corresponding to said mode comprises instructions required for controlling the remote control model to be kept at said preset motion posture.

13. The control device according to Claim 12, wherein the control module is used for acquiring current motion parameter information of the remote control model, and executing a remote control instruction from remote control equipment of the remote control model on the premise of selecting the instructions from the instruction set according to the current motion parameter information of the remote control model and then executing the instructions to control the remote control model to be at said preset motion posture.

14. A remote control module, comprising:
a sensor for acquiring motion parameter information of the remote control model;
a calling module for, under the condition that a control mode in multiple preconfigured control modes is triggered, calling an instruction set corresponding to the triggered control mode according to a corresponding relationship between preset control model modes and instruction sets, wherein each instruction set is used for controlling the remote control model to move under the condition of meeting the requirements of the corresponding control model; and
a control module for controlling the motion of the remote control model according to the instructions in the called instruction set and the motion parameter information of the remote control model acquired by the sensor.

15. The remote control module according to Claim 14, wherein the motion parameter information comprises at least one of followings:
azimuth angle information, height information, acceleration information and angular velocity information.
